Europäisches Patentamt

European Patent Office

Office européen des brevets

(11) Publication number: **0 033 822**
**A1**

(12) **EUROPEAN PATENT APPLICATION**

(21) Application number: **80850164.7**

(22) Date of filing: **29.10.80**

(51) Int. Cl.³: **G 05 D 23/24, B 29 C 27/02**

(30) Priority: **29.10.79 SE 7908945**
**30.10.79 SE 8007565**

(43) Date of publication of application: **19.08.81**
**Bulletin 81/33**

(84) Designated Contracting States: **AT BE CH DE FR GB IT LI LU NL SE**

(71) Applicant: **Kullberg, Arne, Hospitalsgatan 52, S-602 27 Norrköping (SE)**

(72) Inventor: **Kullberg, Arne, Hospitalsgatan 52, S-602 27 Norrköping (SE)**

(74) Representative: **Wibom, Hans Sven Erik et al, Dr. Ludwig Brann Patentbyra AB Box 7524 Kungsgatan 3, S-103 92 Stockholm (SE)**

(54) **A process and a device for hot working.**

(57) This invention is related to a device for hot working, preferably hot forming or welding of plastics, comprising electric heating means for said hot working and a control device for supplying electric heating power to said heating means. Said control device comprises

a) power restricting means (3),

b) means (9) for setting a maximum heating power, said setting means (9) being connected to a control unit (4) which controls said power restricting means,

c) means (6) for measuring the heating temperature, said means being connected to said control unit (4), the signal from said temperature measuring means (6) acting through said control unit (4) on said power restricting means (3) to continuously or in a plurality of steps, preferably at least 3 steps, which preferably are essentially of equal size, restrict the heating power when exceeding a particular, pre-selected temperature, and

d) pulse control means (8) arranged for maintaining the heating power switched-on for an adjustable period of time during at least one continuous pulse period.

The invention is also related to a process for hot working, preferably hot forming or welding plastics, with the aid of electric heating means for said hot working, especially resistance heating means, in which the feeding of electric heating power to said heating means is controlled for at least one continuous pulse period.

A PROCESS AND A DEVICE FOR HOT WORKING

This invention is related to a process and a device for heating and especially for hot working of materials, such as plastics, elastomers and similar, i.e. polymers of organic or inorganic type, especially for welding or hot forming of such materials, e.g. hot sealing, vacuum forming, blowing, extruding, injection moulding, pressure moulding, etc.

According to one embodiment the invention is related to a process and a device for welding and hot forming, e.g. hot sealing of plastics and similar materials in which the supply of required amount of heat is controled in a particular way. Preferably the required heat is supplied to the material with heated tools for welding or hot forming.

According to the invention heat is supplied with an elctrical heating means preferably resistance heat means. The heating power supplied by the heating means is suggestable, preferably continously or in a plurality of steps, such as at least 3, 4, 5, 7 or 10 steps, which preferably each are mutually equal parts of the maximum power, an can be restricted to an adjustable maximum value and controlled continuously or stepwise, as mentioned about, to a minimum value which may be 0 or an adjustably set minimum power value. The adjustment of the power can be achieved with a thyristor, e.g. triac, which is connected into the electrical heating circuit and restricts the electrical current supply, e.g. to a resistance heating means.

Said heating power can also be controlled with regard to a measured temperature, preferably the temperature of the heating means which supplies heat to the material, such as a welding tool or a forming tool, or the temperature of the material being subjected to working. Said control can be set to shut of the supply of electric heating power entirely or to restrict the power to a lowest value of not above 50, 30, 20 or 10% of the set maximum power, when an adjustable set maximum temperature is reached. The supply of electrical heating energy is adjusted preferably so that the electrical heating effect is reduced continuously or step wise, as mentioned above, within a temperature range from a lower measured temperature $t_{min}$ to the set maximum temperature $t_{max}$. This can be achieved with a temperature measuring means, preferably a thyristor, which measures the temperature, e.g. the temperature of a heat releasing electrical heating means, such as a welding tool or a forming tool, said temperature measuring means being connected to supply a signal corresponding to the temperature to a control means which influences the heating power supplied to said heating means. This can be achieved by connecting said temperature measuring means so that it controls said thyrister, preferably through a control unit, e.g. comprising an amplifier. Preferably the temperature measuring means is conncted to control the dissipated electrical heating power with control means which are adjustable so that the electrical heating power delivered as a function of the temperature, also denoted f(t), can be adjusted and set in any desired matter, e.g. to be nearly liniar from a lower control temperature $t_{min}$ to a maximum temperature $t_{max}$ from a higher power $P_{tmin}$ to a lower power $P_{tmax}$ as mentioned above. For said purpose man may use the change of the resistance of a thermistor as a function of the temperature. A suitable temperature range, $\triangle_t$, between the control minimum temperature and maximum temperature can e.g. be up to $100^{O}C$, preferably up to $75^{O}C$ or even lower, e.g. up to 50, 40, 30, 20, 10 or $5^{O}C$.

A suitable temperature range, $\triangle_{tr}$, for the power control, may also be up to 75, 60, 50, 40, 30, 20, 10 or 5% of the set maximum control temperature $t_{max}$ expressed in $^{\circ}K$ or preferably $^{\circ}C$ and especially as a %-part of the temperature range between the ambient temperature at the hot working operation in question and $t_{max}$. The reduction of the power with temperature increase in said range may be set or adjustable to a delivered power at $t_{max}$ of down to 80, 60, 50, 40, 30, 20, 10, 5 or 0% of the highest adjustable maximum power or of the maximum power set for the operation.

The steepness of the power control, i.e. the reduction of power with increasing temperatur, $^{dp}/dt$, p meaning power and t temperature, is thus preferably adjustable. Suitable values may vary e.g. from an upper value of 40, 30, 20, 15, 10, 5 or 3% per $^{\circ}C$ to a lower value of 20, 15, 10, 5, 3, 1, 0,5 or 0,1 % per $^{\circ}C$ and can preferably be linear.

The temperature measuring means should preferably measure the temperature of the heating means or possibly the temperature of the heating material as accuratly as possible. The temperature measuring means, e.g. thermistor, may therefore be arranged with low heat transmission resistance in relation to the heating means and as close to the heating means as possible, e.g. at a distance of at most 1 mm, preferably at most 0,5 mm and especially at most 0,2 mm.

In some cases it is preferable not to cut of the supply of electrical heating energy at the upper temperature limit $t_{max}$ but only to reduce said heating energy to a lower value, $P_{min}$, said lower heating power being adjusted so that it does not give a temperature increase above the desired maximum value but rather a temperature reduction at said maximum value.

The temperature control can of course also be performed with the aid of a plurality of temperature measuring means, in which case temperature control should preferably be performed so that the maximum value is not exceeded by any of said temperature measuring means. Heating can also be performed with a number of electrical heating means which are controlled by said temperature measuring means.

Accordint to the invention the heating power can also be supplied as heating pulses, i.e. preferably as electrical current pulses with a pulsduration (pulstime) which is longer than the period time of the electrical netfrequency i.e. usually 50 periods per second, so that each current puls comprises a plurality of net frequency periods. Preferably the duration of the heating pulses as well as the duration of the interval between said pulses are arbitrarily adjustable within certain ranges as well as the number of heating pulses in a sequence, which are automatically delivered in a working operation. In many cases, e.g. when welding or sealing of plastics a pulstime of up to 100, preferably up to 30, especially up to 10 seconds and an interval time of up to 100, preferably up to 30 and especially up to 10 seconds can be used. The lower limit of the pulstime which can be pre-set may vary, e.g. down to 0,1, especially down to 0,05 or down to 1 second, and said values may also be used for the lower limit of the interval time which can be preset.

The number of pulses may e.g. be pre-set to between 1 and 10 but also a larger pre-set number of pulses may be desirable, e.g. up to 20 or up to 50 pulses.

It is also possible to vary or adjust the duration of the pulstime and/or the interval time in one and the same puls-sequence, i.e. in one and the same heating operation, preferably gradually from a lower puls and/or interval time at the beginning of the operation to a shorter time at the end of the operation, i.e. the end of the pre-set puls sequence at the operation in question. Said gradual variation of the duration of the puls and/or interval time may also be combined with temperature surveying and may be controlled by the temperature so that the puls and/or interval time is gradually reduced when the temperature approximates a pre-set upper temperature value, which may be the maximum temperature value mentioned above. The puls and/or interval time may e.g. be reduced to 75%, 50%, 25% or 10% of the starting value at the biginning of the operation, i.e. the beginning of the puls sequence, when the upper temperature limit, e,g, the maximum temperature is reached, preferably with a gradual reduction up to said temperature, said gradual reduction may be linear or adjustable in any other way. The reduction of the puls and/or inteval time may also be made time dependent and preferably varying from maximum value at the beginning of the operation to a minimum value at the end of the operation or puls sequence, e.g. the minimum välues mentioned above, expressed as % of the starting values. It is possible to combine a gradual or stepwise reduction of the delivered heating power and a gradual or stepwise reduction of the duration of the pulses and/or intervals in one and the same operation.

In the follosing an embodiment of the invention is explained with reference to the enclosed drawing, in which
Figure 1 is a block diagram,
Figure 2 is a circuit diagram of the blocks according to Figure 1,
Figure 3 is a time diagram of the tention in various parts of the circuit diagram according to Figure 2,
Figure 4 is an effect-temperature diagram of a theoretical welding sequence,
Figure 5 discloses the tool arrangement used for heat sealing foils,

Figure 6 shows the shape of the heating means for heat-sealing of semicircular shape,
Figure 7 shows schematically the arrangement of the means according to Figure 6 in a weldingtongs,
Figure 8 shows the arrangement of two tubes which are overlap-welded and
Figure 9 shows the arrangement of the welding means for welding the tubes according to Figure 8.

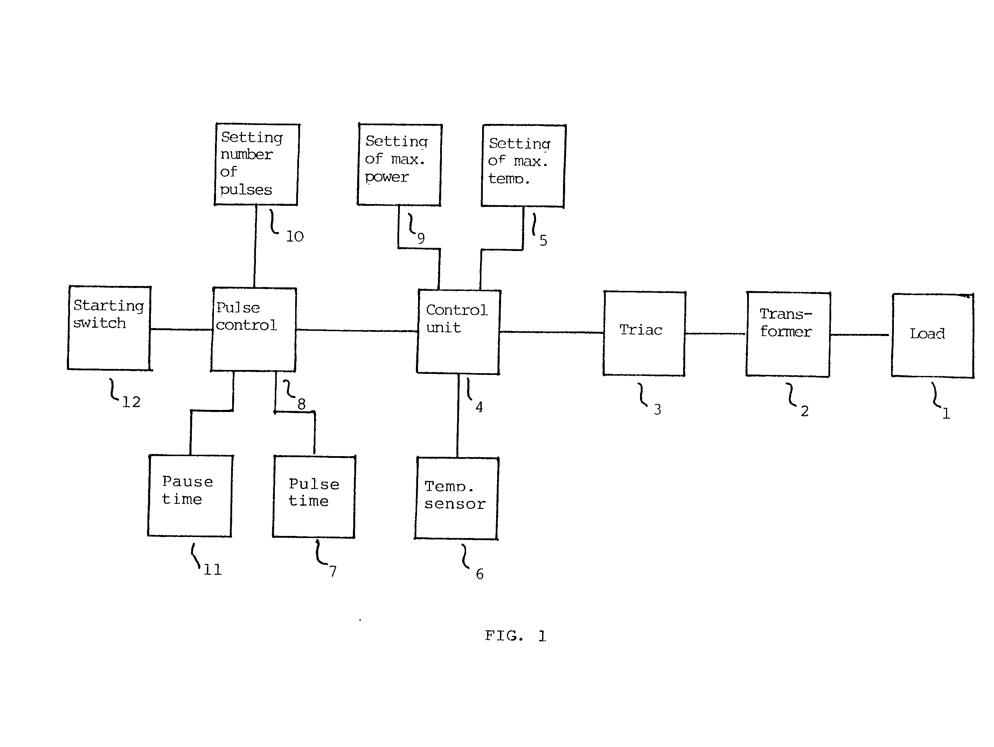

With reference to Figure 1 there is disclosed a block-diagram of an embodiment of the invention which is suited e.g. for welding plastics. Figure 1 shows a load 1, which may consist of one or more welding tools with electrical resistance heating means. For decreasing the personal risks said load is energized with a low tension 48 Volts from a transformer 2. Said transformer is energized from a triac 3 to which are supplied trigger impulses from a control unit 4. To said control unit 4 there is connected a temperature sensor 6, preferably consisting of a thermistor, which preferably may be arranged close to the resistance heating-means, and pre-selection means or a maximum temperature 5 as well as pre-selection means for a maximum effect 9 which may e.g. consist of a potentiometer for manual adjustment graduatet e.g. in a scale of 1-10. Furthermore, there is connected to said control unit 4 a puls control unit 8 with which the pulsed supply of the heating effect to the load mentiond above can be achieved. Connected to said puls control unit are means 7 for selecting the duration of each puls and means 11 for selecting the duration of an intervening paus as well as means 10 for selecting the number of pulses supplied dureing an operation or puls sequence. Having selected desired values of the various parameters with said means the operation is started, e.g. for welding or heatforming of plastic article, by actuating the startswitch 12.

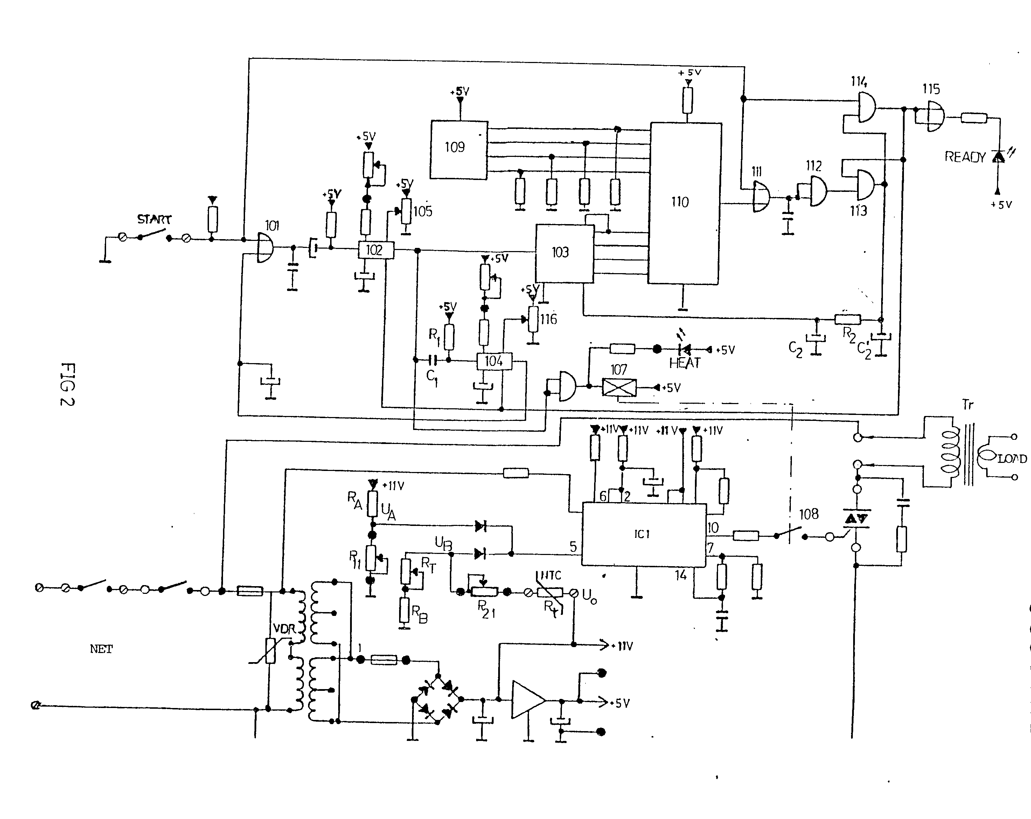

Referring to the circuit schema on Figure 2 the following is a detailed explanation of the way in which one embodiment of the invention works.

When grounding the input START connected to the OR-gate 101 a triggger puls is obtained in a first time circuit 102. Said circuit emits a pulsduration of which is selected by setting a potentiometer 105. A binary counter 103 is hereby added up one step. The output of the time circuit 102 is connectid on one hand through a trigger net $C_1 R_1$ to the input of the second time circuit 104 and on the other hand to both inputs of an AND-gate 106. The output from the AND-gate 106 is fed to a relay 107. The relay switch 108 of the said relay 107 is arranged to switch on the trigger pulses from the control circuit IC1. The other timing circuit 104 is triggered with the rear edge of the puls delivered by said first timing circuit 102. When the output from said second timing circuit 104 decreases after a period of time which is determined by the setting of the potentiometer 116, a starting impuls is supplied to said first timing circuit at the gate 101 and a repetitive secuence is obtained.

The number of pulses which are to be delivered at the welding is set with a thumwhieel switch 109 which supplies BCD-code corresponding to a set digit on the four output circuits 11, 12, 13, 14. The logical output from the counter 103 is compared with the code from the pre-setting device 109, and at coincidence a logical signal is obtained at the output of the logical comparator 110. This turns over the flip-flop concisting of the AND-gates 114 and 113 and through the relay circuit $C_2 R_2 C_2'$ a reset puls is obtained at the counter 103. Simultaneously the timing circuits 102 and 104 are deactivated by a signal from said flip-flop 114 and 113. At the same time a light emitting diod "READY" is switched on. During the pulstime of said first timing circuit 102 the light emitting diod "HEAT" is switched on.

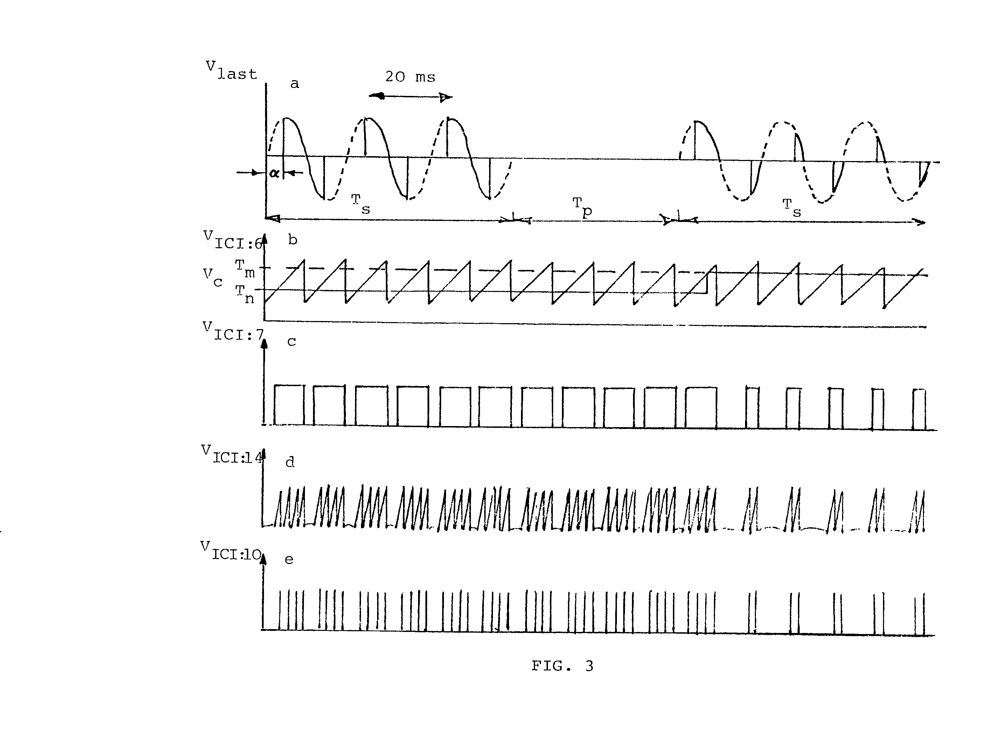

The maximum welding power is set with the potentiometer $R_{11}$ in the voltage divider consisting of the resistances $R_A$ and $R_{11}$. The control voltage to the control circuit IC1 is tapped at the point $U_A$ and fed through the diode $D_1$ to the input 5 of IC1. In the instant integrated circuit the control circuit is a DC voltage with the control range between 1,4 V to 5,6 V. The maximum power is obtained at the lowest voltage. The power is controlled by phase control according to the graph on Figure 3 in which $V_c$ denotes to control voltage and $T_n$ is the value of said control voltage at a set maximum power and $T_m$ is the value of the control voltage when reaching a set maximum temperature.

The voltage at the anode of the diode $D_1$ is at the onset of a welding operation higher than the voltage at the anode of diode $D_2$. Thus, $D_1$ is conducting and $D_2$ is non-conducting. When the temperature of the welding tools exceeds a pre-determined temperature which is set with the potentiometer $R_{21}$ the voltage at the anode of the diode $D_2$ rises due to the decrease of the resitance of the NTC-resistance or the thermistor, and the diode $D_2$ becomes conducting and $D_1$ non-conducting. The voltage divider $R_A$ and $R_{11}$ are disconnected and the triac is now controlled by the variations of the NTC-resistance. With heated-upwelding tools the welding sequence is thus controlled by the thermistor until the welding is continued and the temperature of the welding tools again decreases to a lower value at which the diode $D_1$ again becomes conducting and $D_2$ non-conducting and the voltage dividers with the starting voltage $U_A$ according to Figure 1 are again switched on. Instead of one thermistor two or more thermistors can of course be connected in paralell or in series. Figure 3 shows various curve shapes in the control device according to the invention described above. Figure 3a shows the voltage at the primary side of the welding transformer as a function of time in a particular welding operation. $T_s$ denotes the heatingtime and $T_p$ denotes the cool-off time. The ignition angle of the triac is denoted $\alpha$ and varies between 0 and $\pi$ radianes.

Figures 3b-3e show signal voltages as function of time from various blocks of the integrated circuit IC1. The instant embodiment uses phase control of the thermistor and curve shapes 3b-3e are drafted with Figure 3a as a reference. The integrated circuit IC1 consists basically of five function blocks, i.e. a D.C. voltage source, zero-pointpassage detector, difference amplifier, rampfunction generator and trigger puls amplifier.

Figure 3b proves the signal at one of the inputs to the difference amplifier, and said graph also discloses the level $T_m$ of the control voltage $V_c$, which gives the set maximum power and the control voltage level $T_m$, which gives control of the power corresponding to a particular set maximum temperature of the welding tools.

Figure 3c shows the output signal from the difference amplifier,
Figure 3d shows a signal in said ramp funtion generator and Figure 3e shows the output signal from the trigger puls amplifier.

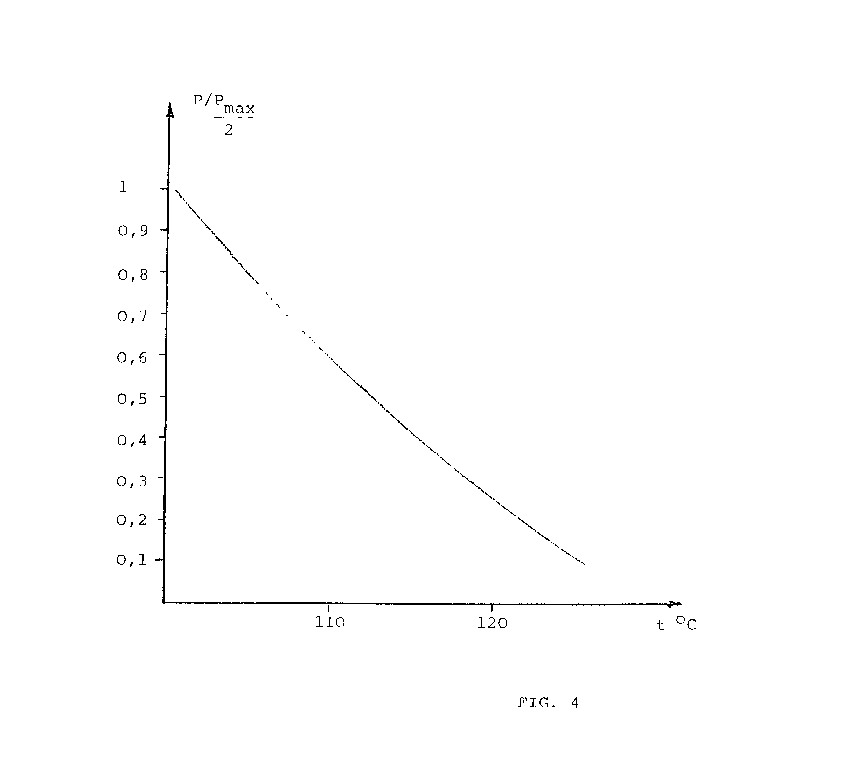

Figure 4 shows the reduction of power as a function of the temperature in a theoretical welding operation. The set value of the mximum welding power is half the maximum available welding power corresponding to an ignitionangle of $\frac{\pi}{2}$. The pre-selected maximum temperature is $100^{\circ}C$.

When using said device for e.g. welding plastics, such as hot sealing plastic foils between two tools, it is preferable to start by pre-selcting a pulstime which by
experience is selected at a suitable, preferable low value.
Furthermore, the maximum temperature is pre-selected to a
value which is suitable for the material, preferably at a
low value within the range which by experience is suitable.
Furthermore, the maximum power is pre-selcted at a value
which can be expected to give the desired temperature
within the pulstime, preferably at the end of the pulstime.
After arranging the material, e.g. the plastic foils, in
the device, the device is put into operation. If the pulstime is shorter than the pre-selected time the maximum
temperature is reached during said puls which may be
indicated by a separate signal means, e.g. a signal lamp.
After the testwelding operation the weld is inspected, and
the pre-selected values may thereafter gradually be increased or decreased until the best welding result is obtained.
If an unsatisfactory welding result is obtained with one
puls it is possible to test the use of two or more power
pulses , preferably with the same total switch-on time as
the originally tested single puls. The use of said pulses
is especially suited for welding thicker materials or
vulnerable materials which give a longer heatdiffusion path
or require lower temperature gradients.

As an example the reference can be made to welding or
forming plastics, the maximum power of the device being
3 kW. The tools are provided with 4 resistance heating
means with the power 500 W each which at full effect reach
the temperature 450$^{\circ}$C. A suitable working temperature is
about 200$^{\circ}$C and the expected forming time 4 seconds. Said
time is set and the temperature and the maximum power are
set at or below the expected suitable values, whereafter a
test operation is performed. If the result is not satisfactorily the values of power and temperature are increased
stepwise until the desired result is obtained.

The device may optionally be provided with means with which a serie of test operations with stepwise changed parameter values is automatically performed in accordance with a pre-determined schedule when thereafter the best result in said test serie is determined and the device is set for said values.

In the following examples are given of the use of the process and the device according to the invention for welding plastics. The heating means consisted of iron--constantan with the resistance 0,73 ohm/m at the roomtemperature and 0,775 ohm/m at 200°C.

Example 1.

In this experiment the control device disclosed above was used in combination with a couple of straight welding tools (welding clamps) of steel of the shape disclosed on Figure 5. Said figure shows a couple of straight welding clamps 1 with the longitudinal extension 400 mm. At the inner surface of each welding claim there is a resistance means consisting of a resistance strip 2 the size which is 4 x 0,25 x 420 mm. Said resistance strips are connected in series and connected to the output of a transformer which is controlled with the device according to the invention. Furthermore, a thermistor 3 is arranged in the upper welding clamp closely to said resistance strip.

The welding material consisted of soft polyvinylchlorid with the thickness 0,10 mm and the meltingpoint about 140°C. Two layers of said material are joined by welding. In said welding operation the following settings of the controls on the control device are used:

        Power           3,9 (index)
        Temperature     4   (index)
        Time            7   (index) (= about 7 seconds)
        Number of pulses 1

By measuring amperage and voltage at the resistance strips connected in series with voltage meter and ampere meter which show the effective values the following results was obtained:

Starting voltage 7 volt

```
Amperage
   at switch-on         about 17 A
   after about 1 second       16 A
   after about 4 seconds       8 A
   at the end of the puls about 2 A
```

For the first 2-3 seconds av the pulstime the effect was calculated to about 100 watts.

The claimping pressure used för welding amounted to in average about 0,1 kp/cm longitudinal extension of the weld, calculated as the load divided with the contact surface of the heating strip.

A very good weld was obtained.

Example 2.

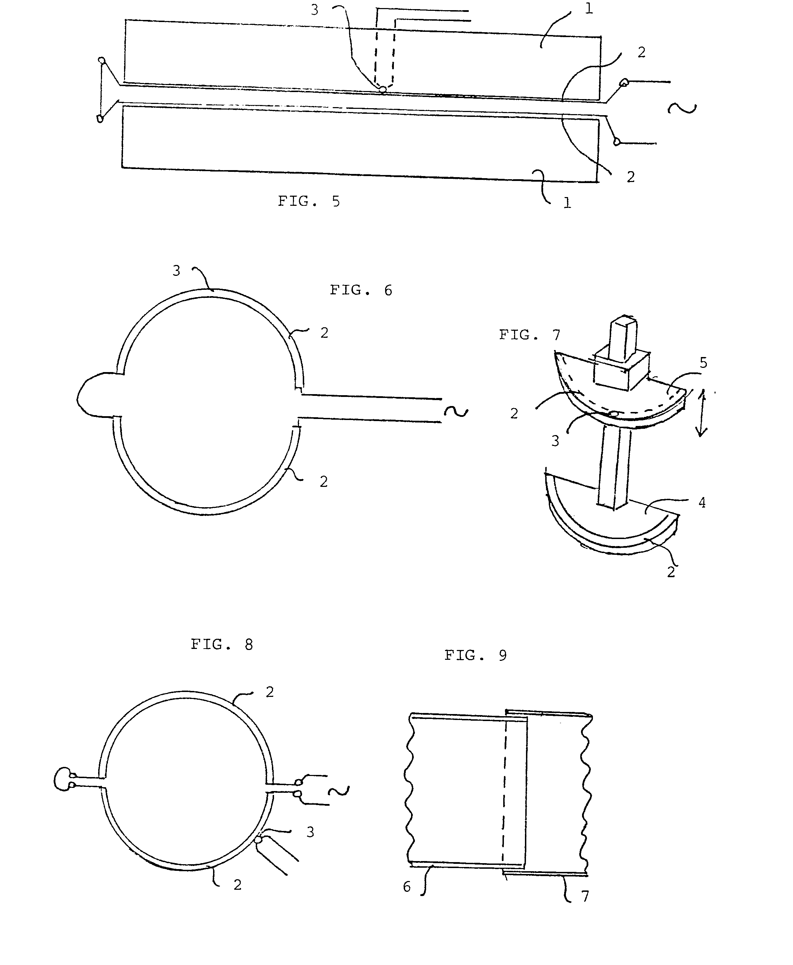

In this experiment a weld of semicircular shape was produced with a pair of welding tongs. The pair of welding tongs is shown on Figures 6 and 7. Figure 6 shows the shape of the heating means 2 and the arrangement of the thermistor 3. Figure 7 shows the shape of the welding tongs with a fixed part 4 with a semicircular resistance means 2 and a movable part 5 which is likewise provided with a semicircular resistance heating means and which can be moved against the fixed part as is indicated on the Figure. The resistance means consisted of a welding strip with the cross section 4 x 0,25 mm and the extension about 82 mm. Said means where connected in series and as in the experiment according to example 1 where connected to the output of a transformer which was controlled by a device according to the invention. The thermistor 3 was arranged close to one of the heat-resistance strips.

The welded material consisting of a rigid, clear polyvinyl chloride foil with the meltingpoint about 145°C and the thickness 0,35 mm. Two such foils where welded together.

In the welding operation the following pre-selected index values where used in the device according to the invention:

| | |
|---|---|
| Power | about 3,8 |
| Temperature | 5 |
| Time | 5 seconds |
| Number of pulses | 1 |

The welding time amounted to 2 seconds and voltage and amperage, measured as stated in example 1, where measured in to in  average 5,5 volts and 24,5 Amperes. The amperage decreased from the maxium of 25-28A at switch-on to a stable value of 20,5 A after about 1 second.

In said experiments a very good welding result was obtained.

When using a pre-selected powerindex value of below 3 an entirely satisfactory weld could not be obtained even when using 5 pulses with a pulstime of 3 seconds and the same paus time.

Also when using a temperature index value below 4 a good weld could not be obtained.

In all said experiments an average pressure force of about 0,1 - 0,15 kp/cm weld extension was used.

Example 3.

In this experiment plastic tubes where welded as disclosed scetch-like on Figures 8 and 9. Figure 8 shows an inner tube 6 of polyethylene coated aluminumfoil, to the end of which is welded an outer tube 7 of polypropylene. The thickness of the polyethylene layer was about 10 microns and the thickness of the polypropylene layer was about 0,35 mm. The melting temperature of the polypropylene tube was about 130°C.

Figure 9 shows the shape of the resistance means 2 which consisted of welding strip with the cross-section size 6 x 0,15 mm and the extension of 130 mm and comprised a semicircular part with the extension 110 mm and two radially directed parts with the extension 10 mm for electric connection of the heating strips. The heating strips where connected in series and connected to the output side of a transformer which was controlled by a device according to the invention as disclosed in connection with the preceding examples.

A thermistor 3 was arranged close to the lower semicircular resistance heating strip 2.

The following pre-selected values where used in the welding operation with the device according to the invention:

| | |
|---|---|
| Power | 3,5 |
| Temperature | 3,5 |
| Time | 4,5 (about 4 seconds) |
| Number of pulses | 1 |

Voltage and and amperage where measured in the same way as stated in preceding examples.
The voltage at switch-on amounted to 4,8 volts.
The amerage at switch-on amounted to 26-27 amperes and after 1 second to about 24 amperes, and thereafter the amperage gradually decreased to a final value of 8-10 amperes at the end of the pulstime. The real pulstime was about 4 seconds.

A perfect weld was obtained. The welding could be repeated with intervals of about 10 seconds with the same good result.

When performing welding operations, e.g. hot sealing, gluing and similar operations according to the invention it is also possible to control the pressure force with which the heating means are applied against the material being treated. The pressure force can be controlled during the operation depending upon time and/or temperature and/or electrical output power, and said control can be performed through the same device which is used for controlling the heating power or with a separate control device. The pressure used in the welding operation can e.g. be controlled from a high original pressure force which gives good heattransfer, to a lower pressure force at higher temperature in the material, which prevents that the tool intrudes too deep into the heatsoften material. For welding (hot sealing) e.g. polyolefines, polyvinylchloride and other materials an average pressure force of below 1 kp/cm, e.g. below 0,5 or 0,25 kp/cm and preferably above 0,01 e.g. above 0,05 or 0,1 kp/cm of the extension of the weld in many cases has been found suitable.

As examples of materials which can be treated with the process and device according to the invention reference can be made to thermoplastics in general, such as polyolefines, e.g. polyethylene (low density and high density), polypropylene and polybutylene, polymethylpenten, and copolymers of these and also with other copolymerisable monomers, e.g. ethyl acrylat and vinylacetate, especially with ethylene, styreneplastics, polystyrene, styrene-acrylonitrileplastics, acrylonitrile-butadiene-styrene plastics, methacrylate- -butadiene-styrene plastics, methacrylat-styrene plastics, thermoplastic styrene-butadiene rubber, vinyl plastics, e.g. vinylchloride plastics, polyvinylchloride, vinylacetate plastics, polyvinylacetate, vinylacetal plastics, polyvinylacetal, vinylalcohol plastics, polyvinylalcohol, amide plastics, polyamides, nylon, cellulose plastics, cellulose acetate, cellulose acetate- butyrate, cellulose acetate propionate, ethylcellulose, acryl plastics, polyacrylate, polymethyl acrylate, formaldehyde plastics, polyformaldehyde, acetal plastics, carbonate plastics, polycarbonate, fluoro-chloro-olefine plastics, fluoroethylene plastics, polyfluoroethylene, polytetrafluoroethylene, polyfluoro-ethylene propylene, polyfluorotrifluoroethylene, polyviny-lidenfluoride, polyvinylfluoride, chloroether plastics, linear ester plastics, linear polyesters, polyethylene-terephthalate, polyethyleneglycolterephthalate, phenyleneoxide plastics, polyphenylenoxide, aromatic sulphon plastics, polysulphons, phenoxiplastics, and furthermore also curing plastics, such as pheno plastics, amino plastics, unsaturated ester plastics, alkyd plastics, allyl plastics, epoxy plastics, casein plastics, silicon plastics, furan plastics, furfuryl plastics, uretan plastics, polyuretan.

Said plastics may be used in the shape of e.g. foils, sheets, foam sponge, fibres, beads, grains, etc.

To said plastics other materials can be bonded or combined, e.g. metal, ceramics, glass, textiles, woven and non-woven, such as cotton, wool, viskose, etc.

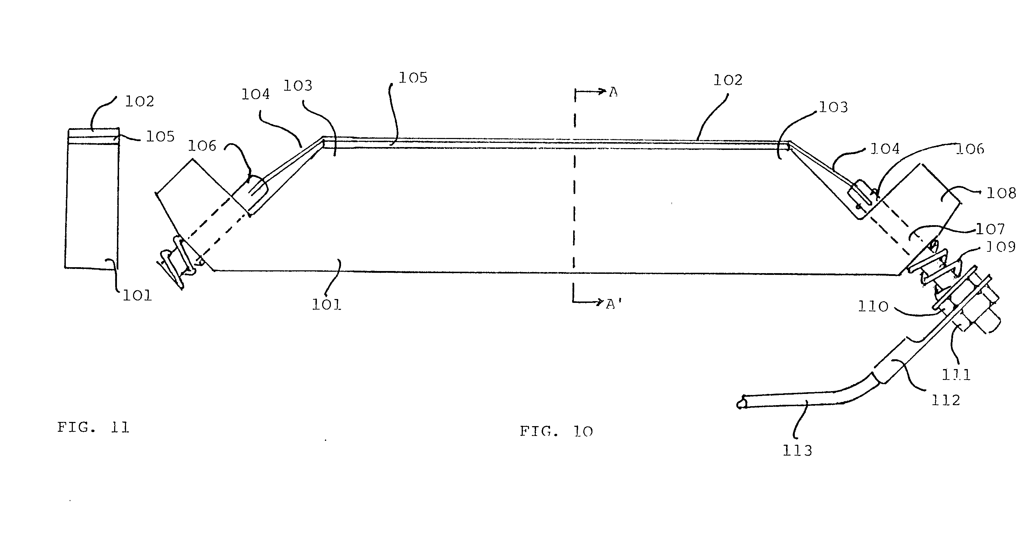

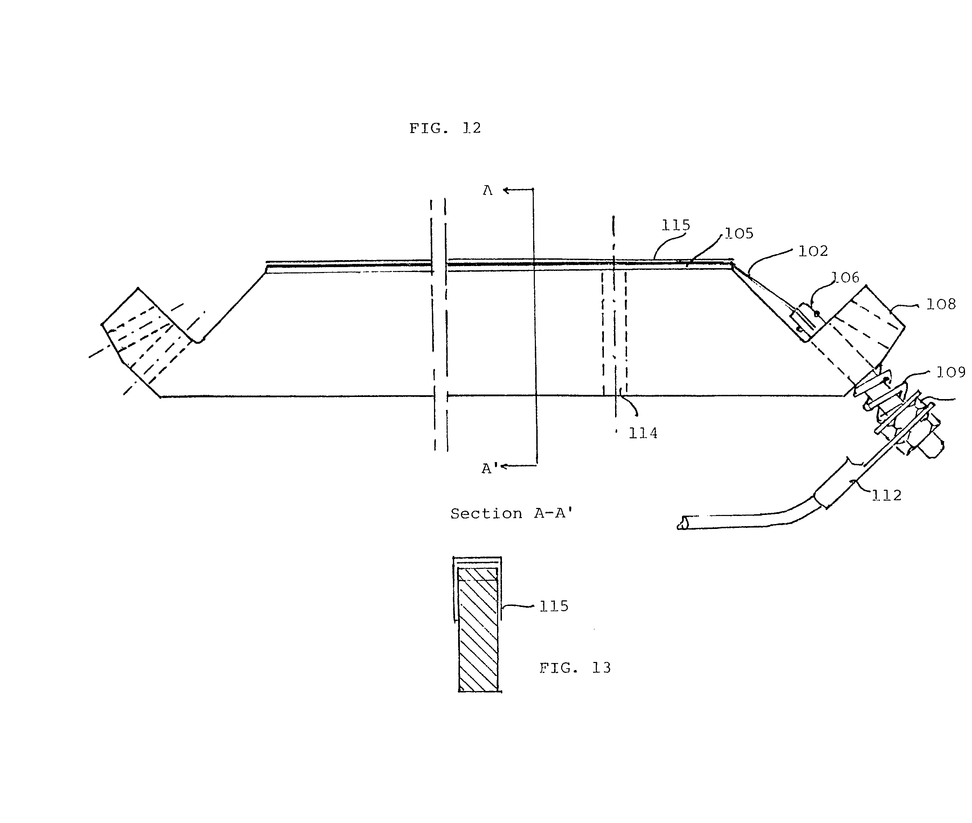

The following comprises a description of an embodiment of a tool which is especially suited for use according to the invention and comprises a substrate body, preferably in the shape of a stright ruler or a prismatic body, e.g. an elongated body with essentially rectangular cross-section shape, and an electric heating means arranged in the longitudinal direction of the body with the body as a supporting substrate, preferably on one of the narrow longitudinal side surface of the body. According to the invention said heating means is maintained under traction tension with a tensioning means, e.g. helical springs or similar spring means, at one or both ends of said heating means. One such device is disclosed schematically on Figure 10 in a side view and on Figure 11 in a section along A-A. On said elongated substrate body 101 there is arranged a resistance element 102 in the shape of a metal strip extending along a central part intended to act upon a treated material, between two edges 103 of said substrate body acting as diflections points for said strip so that said strip by the incluence of a tension in the end part can be maintained bent in an angle against said central part on said edges 103. The figure shows also a heat insulating and/or elctrically insulating spacer 105 between the resistance strip 102 and the substrate body 101. The end parts 104 of said strip are fixed to a tensioning means 106 extending through an opening 107 in a flange-like part or extrusion 108 at the endpart of the body 101. Said tensioning means 106 has the shape of a bolt with a threaded end part which extends outwordly from said flange 108, said outwordly extending part being surrounded by a helical spring 109 urging against a nut 110 on said threaded end of said means 106 which with a further nut 111 holds a cable 112 on the end of an electric supply cable 113. A corresponding tensioning means can be arranged at the other end of the tool body 101. By arranging the resistance element deflected on a deflecting point or deflecting means at an angle away from the central part of the resistance means intended for application against the work piece the electrical connection means will require only a small space so that a plurality of heating means can be arranged at a small mutual distance parallel with each other.

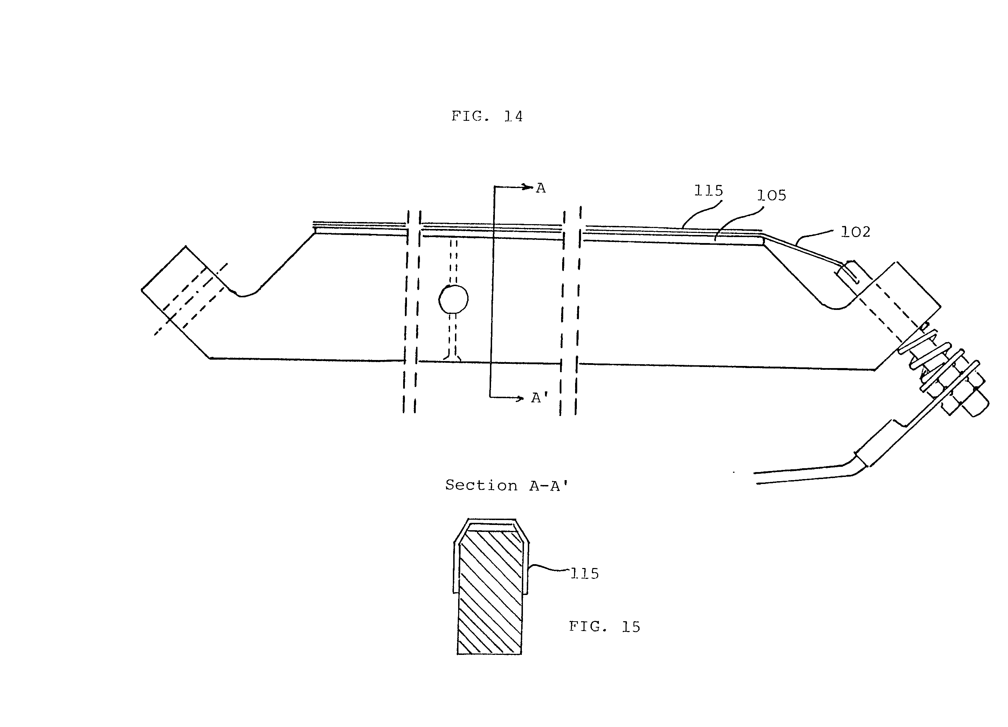

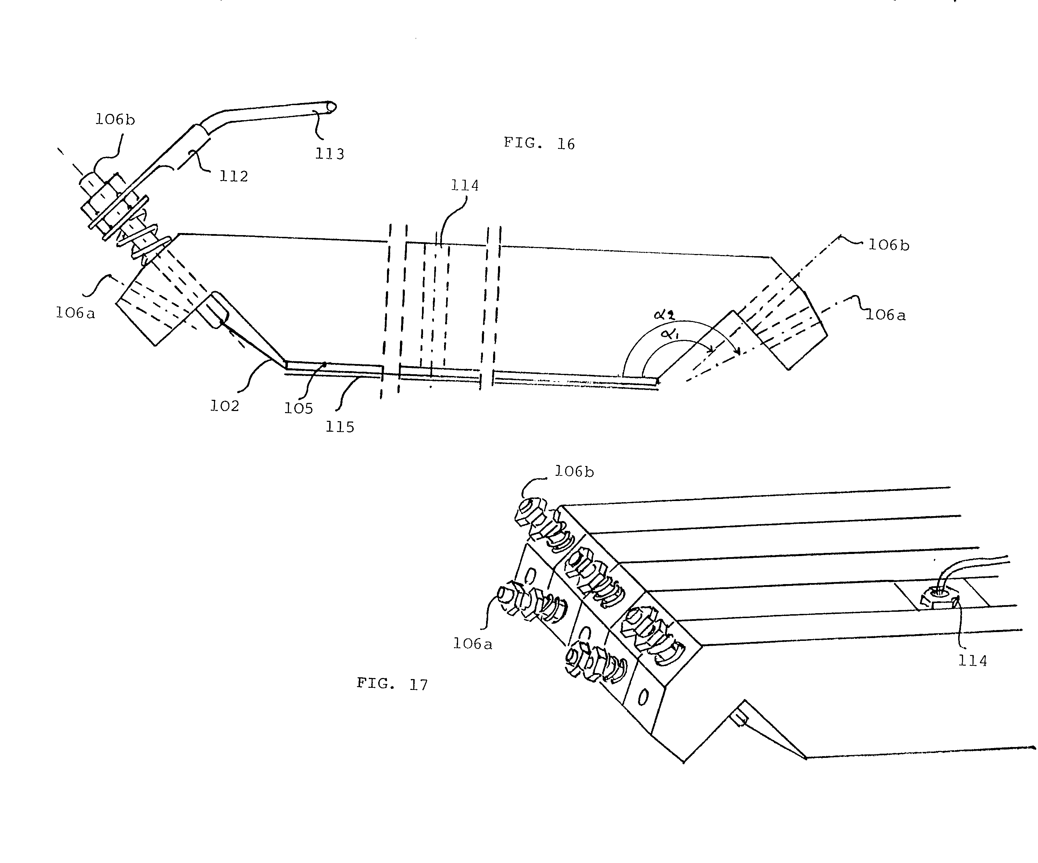

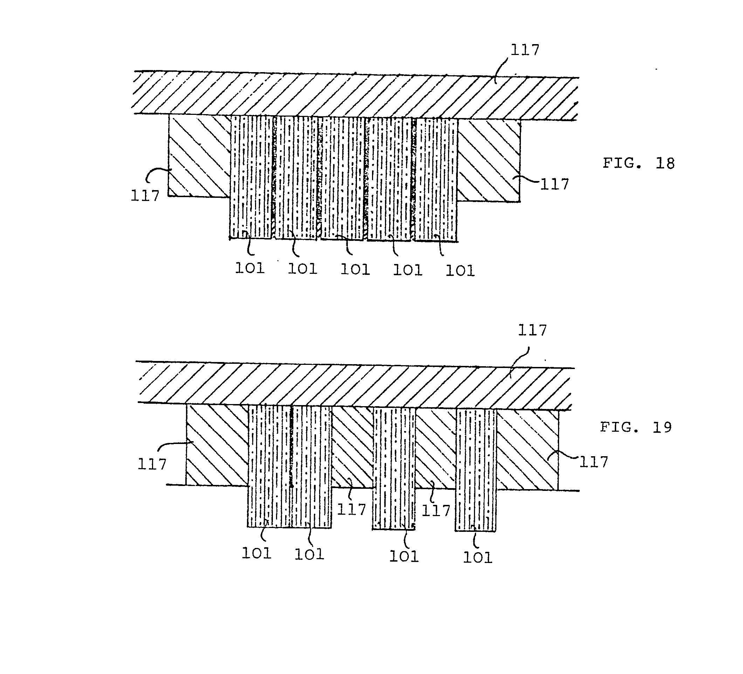

Figures 12-19 show similar embodyments of tools which are suitable for use according to the invention. An opening 114 for inserting a temperature measuring means e.g. a thermistor, is also disclosed on the figures. Furthermore, a coating 115 intended to prevent adherence to the work piece, e.g. made from Teflon glass fabric or a similar material is arranged on said resistance strip 102.

Figure 17 shows a group of tools arranged in parallel, the tensioning means 106 on adjacent tools being directed alternating so that they form a larger angle $\alpha_2$ of the means 106a and the smaller angle $\alpha_1$ of the means 106b, alternatively, in relation to the central part of the resistance strip. By alternating arrangement the connection of the electrical lines 112-113 is facilitated.

Figures 118 and 119 show sections through such groups of tools 101 provided with heating means clamped in retaining means 117.

Below a number of embodiments are disclosed which comprise reference numerals corresponding to the drawings.

1.    Electric forming tool provided with resistance heating means especially a welding tool (welding clamp or welding jaw) for welding plastics and similar, characterized in that said tool comprises a body 101 acting as heat insulating substrate, said body preferably having lower heat conductivity than metals (steel, brass), and a resistance heating means 102 arranged at the intended working surface of said tool.

2.    A tool according to embodiment 1, characterized in that said substrate consists of a body of plastics or elastics, especially a polymeric material, which preferably is enforced with an enforcing filler, such as glass fibers, a woven material or similar material, e.g. a phenolformaldehyde resin reinforced e.g. with a woven material or glass fibres.

3.    A tool according to embodiment 1 or 2, characterized in that said resistance heating means consists of metal, such as a metal strip, or an electrically conducting polymeric material, especially elastics material, such as rubber, with condacting filer, such as carbon particles.

4. A tool according to any of the preceding embodiments, characterized in that said heating means on the surface facing the work piece is coated or covered with a material 115 with good release characteristics in relation to the treated material, e.g. a fluorine containing organic polymer, e.g. polymerized fluorinated olefine, such as polytetrafluoro ethylene.

5. A tool according to any of the preceding embodiments, characterized that the electrical resistance heating means 102 is maintained under tension with a spring means 109 excerting a tension in the longitudinal direction of said heating means, said heating means consisting of an elongated body, preferably in the shape of a strip and preferably with rectangular cross-section.

6. A tool according to embodiment 5, characterized in that said tool comprises an elongated substrate body 101 and arranged on said substrate body an elongated heating means, at least a part 104 of said heating means at least at one end of said heating means being directed in an angle in relation to an adjacent, central part of the heating means and the surface or the plane along which said heating means contacts the material being heated, and combined with a spring means 109 maintaining said heating means under tension, said end part of said heating means preferably also being connected to an electrical connecting means 112 for supplying heating power.

7. A tool according to embodiments 5 or 6, characterized in that the end part 104 of said heating means or the connecting means 106 connected to said endpart extends through an opening 107 in said substrate body, with a compressed ring means 109, preferably a helical spring
means, applying against the end of said heating means
for a connecting means connected to said heating means,
preferably against a protruding flange like part 108 or
nut 110 on said connecting means, so that said heating
means hereby is maintained under tension.

8.   A tool according to any of the preceding embodiments,
characterized in that said substrate body consists of an
elongated body 101 with preferably essentially square or
rectangular cross-section, said heating means 102 being
arranged on one side of said substrate and forming a flat
or curved working surface facing the work piece, the end of
said substrate body being provided with a protrution 108
or a flange with a recess or opening 107 through which
the endpart of said heating means 102 or the connecting
means 107 extends, said protrution or flange protruding
from a part of said substrate spaced from the side of said
substrate facing said heating means, the endpart of said
heating means and/or the connecting means and optionally
said opening or recess in said flange or protrution and
preferably also said protrution or flange being directed
in an oblique angle $\alpha_1, \alpha_2$ against the working surface of
said heating means, preferably in an angle of 15-75$^\circ$.

CLAIMS

1. A device for hot working, preferably hot forming or welding of plastics, comprising electric heating means for said hot working and a control device for supplying electric heating power to said heating means, characterized in that said control device comprises

a) power restricting means (3),

b) means (9) for setting a maximum heating power, said setting means (9) being connected to a control unit (4) which controls said power restricting means,

c) means (6) for measuring the heating temperature, said means being connected to said control unit (4), the signal from said temperature measuring means (6) acting through said control unit (4) on said power restricting means (3) to continuously or in a plurality of steps, preferably at least 3 steps, which preferably are essentially of equal size, restrict the heating power when exceeding a particular, pre-selected temperature, and

d) pulse control means (8) arranged for maintaining the heating power switched-on for an adjustable period of time during at least one continuous pulse period.

2. A device according to claim 1, characterized in that the device comprises connected to said pulse control means (8) a pulse repeating means for repeating a selected heating pulse, and means (10) for pre-selecting the number of pulses, and means (11) for pre-selecting a pause time period between each pulse in the hot working sequence.

3. A device according to claim 1 or 2, characterized in that said power restricting means (3) is a thyristor and in that said control unit (4) supplies the thyristor with control or trigger pulses for phase control.

4. A device according to claim 2, characterized in that said power restricting means (3) consists of a thyristor

0033822

working as a static switch which is acted upon by said temperature measuring means through said puls control in a manner such that the pulstime is continuously reduced when exceeding a particular pre-selected temperature.

5. A device according to any of the preceding claims, characterized in that the means (6) for measuring the heating temperature is a thermistor.

6. A device according to any of claims 1-5, characterized in that said control unit comprises surrounding means for adjusting the derivate of the output power versus temperature when exceding a particular pre-selected temperature.

7. A device according to any of claims 1-6, characterized in that said temperature measuring means is arranged in the immediate vicinity of said heating means, preferably at a distance of at most 1 mm, especially at most 0,5 mm.

8. A process for hot working, especially hot forming or welding plastics, with the aid of electric heating means for said hot working, especially resistance heating means, in which one controls the supply of electric heating power to said heating means during at least one continuous puls period, characterized by controlling the heating power, supplied by said heating means, continuously or in a plurality of strips, preferably at least three essentially equal steps, with the aid of temperature measuring means arranged to measure the temperature of the heating means or of the plastics subjected to hot working, said control being performed from a pre-selected upper controlled outset effect or starting effect at a preselected lower starting temperature $T_b$ to a lower control endeffect $T_s$ at a pre--determined endtemperature $T_s$.

9.   A process according to claim 8, characterized by performing said control of the supplied heating power with the device according to any of claims 1-7.

FIG. 1

0033822

FIG 2

FIG. 3

FIG. 4

0033822

0033822

FIG. 5

FIG. 6

FIG. 7

FIG. 8

FIG. 9

FIG. 11          FIG. 10

FIG. 12

A

115  105

102

106

108

109

112

114

A'

Section A-A'

115

FIG. 13

0033822

FIG. 14

A

115  105

102

A'

Section A-A'

115

FIG. 15

0033822

FIG. 16

106b

112

113

114

106b

106a

$\alpha_2$
$\alpha_1$

106a

102     105
115

106b

106a

114

FIG. 17

0033822

117

FIG. 18

117

117

101    101    101    101    101

117

FIG. 19

117

117

117    117

101    101    101    101

European Patent Office

**EUROPEAN SEARCH REPORT**

0033822

Application Number

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 2 011 195 (MIDLAND BINDING) <br> * Page 1, lines 39 to 65; page 2, line 32 to page 3, line 24; page 4, lines 5 to 41; figures 4,8 * <br> -- | 1,3-5, 8 | G 05 D 23/24 <br> B 29 C 27/02 |
| | US - A - 3 617 696 (J. REENSTRA) <br> * Column 2, line 62 to column 3, line 28; column 5, lines 9-38; column 5, line 71 to column 6, line 9; column 6, lines 21-31; figures 1,2,3 * <br> -- | 1,6-8 | |
| | FR - A - 2 388 450 (LICENTIA) <br> * Page 1, lines 32-39; page 2, line 28 to page 4, line 5; figures 1B,4 * <br> -- | 2 | **TECHNICAL FIELDS SEARCHED (Int. Cl.³)** <br><br> G 05 D 23 <br> B 29 C 27 |
| | DE - A - 2 816 420 (STEINEL KG) <br> * Page 1, line 1 to page 3, line 3; figure 1 * <br> -- | 1 | |
| | DE - A - 2 633 423 (PH ... B... ) <br> * Page 1, lines ...-25; figure 1 * <br> -- | | **CATEGORY OF CITED DOCUMENTS** <br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| X | The present search report has been drawn up for all claims | |
|---|---|---|
| Place of search <br> The Hague | Date of completion of the search <br> 16-04-1981 | Examiner <br> HA... |

EPO Form 1503.1 06.78